# EUROPEAN PATENT APPLICATION

(11) **EP 1 555 173 A2**
(43) Date of publication of application: **20.07.2005**
(21) Application number: 05000056.1
(22) Date of filing: 04.01.2005
(51) Int. Cl.: B60R 22/44

(54) **Method and device for controlling a motor-driven seatbelt retractor**

(30) Priority: 14.01.2004 JP 2004006424
(71) Applicant: TAKATA CORPORATION, Minato-ku, Tokyo 106-8510 (JP)
(72) Inventor: Tanaka, Koji, Tokyo 106-8510 (JP); Inuzuka, Koji, Tokyo 106-8510 (JP)
(74) Representative: Banzer, Hans-Jörg, Dipl.-Ing.

(57) **Abstract**

In order to provide a method and a device for controlling a seatbelt retractor in which a smooth seatbelt retraction for a vehicle occupant is achieved while a waste of power consumption of a battery is prevented in step S11, it is determined whether or not a predetermined time has passed since a door-lock release signal from a keyless entry system was input. If the predetermined time lapse is not determined, the operation ends. If the predetermined time lapse is determined, the operation proceeds to step S12 where it is detected whether or not the door is opened. If it is determined that the door is not opened, the operation ends. If the opened state of the door is detected, the operation proceeds to step S13 where a motor is driven in a direction for retracting the seatbelt. Accordingly, the operation is prevented from proceeding to step S13 when a person is getting into the vehicle, meaning that the seatbelt is retracted only when a vehicle occupant is getting out of the vehicle.

## Description

### [Technical Field]

The present invention relates to a method for controlling a seatbelt retractor having a mechanism for retracting a seatbelt with a motor.

### [Background Art]

A typical seatbelt retractor provided in, for example, a vehicle retracts an excess withdrawn length of a seatbelt after a seated occupant pulls out the seatbelt and fastens a tongue to a buckle. To achieve such a function, conventional seatbelt retractors are provided with a single return spring. To fasten a seatbelt, a person must pull out the seatbelt against the resilient force of the return spring. When the person releases his/her hand from the seatbelt after fastening the tongue to the buckle, the force of the return spring allows the excess withdrawn portion of the seatbelt to be retracted to the seatbelt retractor until the seatbelt fits the occupant's body.

According to the above description, a seatbelt retractor must satisfy the following two conditions:
(1) An excess withdrawn portion of the seatbelt must be properly retracted until the seatbelt fits the body of the occupant, and if the seatbelt is not to be worn by the occupant, the withdrawn seatbelt must be retracted until the seatbelt is properly stored in a housing.
(2) When the seatbelt is properly worn by the occupant, the seatbelt must not put an unnecessary pressure on, for example, the chest of the occupant.
However, according to a seatbelt retractor having a single return spring, if a low-resilient spring is used to reduce the pressure on the chest of the occupant wearing the seatbelt, the retracting force for the seatbelt retraction (for storing) is also reduced, thus lowering the operationability and retractility. In contrast, if a high-resilient spring is used to achieve a high retracting force for the seatbelt retraction, the pressure on the chest of the occupant wearing the seatbelt is increased.

Furthermore, according to the single return spring included in conventional seatbelt retractors, the return spring is wound as the seatbelt is further withdrawn, thus increasing the resilient force of the spring. Accordingly, this is problematic in that the retracting force increases as the withdrawn length of the seatbelt is increased.

To solve such problems, Japanese Unexamined Patent Application Publication No. 2001-225720 (Patent Document 1), for example, discloses a method for retracting a seatbelt with a seatbelt retractor having a motor or a combination of a motor and a return spring. Furthermore, such a seatbelt retractor provided with a mechanism for retracting a seatbelt with a motor is also disclosed in Japanese Unexamined Patent Application Publication No. 11-301407 and Japanese Unexamined Patent Application Publication No. 11-334533.

### [Problems to be Solved by the Invention]

According to such seatbelt retractors provided with a mechanism for retracting a seatbelt with a motor, the seatbelt is generally retracted when the seatbelt is released from a buckle. Furthermore, it is better for an occupant that the seatbelt is retracted when the occupant is getting out of a vehicle. In order to achieve this, it is preferable to use a signal of, for example, a door switch, such that the seatbelt retraction may be started when a signal indicating that the door is opened is input.

However, a door is opened not only when an occupant desires to get out of a vehicle, but also when an occupant desires to enter the vehicle. In most cases, when an occupant is getting into a vehicle, the seatbelt is already in a completely retracted state. Driving the motor in the direction for seatbelt retraction in this state uses unnecessary electric current and is thus a waste of energy. This leads to a waste of power consumption of a battery.

Accordingly, the object of the present invention is to provide a method for controlling a seatbelt retractor which allows retraction of a seatbelt only when an occupant is getting out of a vehicle. Such a method provides smooth seatbelt retraction for the occupant and prevents waste of power consumption of a battery.

### [Means for Solving the Problems]

According to the invention, this object is achieved by a method for controlling a seatbelt retractor as defined in Claim 1 or 2 and a device for controlling a seatbelt retractor as defined in Claim 4 or 5. The dependent claim defines a preferred and advantageous embodiment of the invention.
According to a first aspect of the present invention, a method for controlling a seatbelt retractor having a mechanism for retracting a seatbelt with a motor is provided. The method includes the steps of receiving a door-open signal; determining whether or not the door-open signal is received after a predetermined time lapse from a time point of an input of a door-lock release signal; and retracting the seatbelt only if the door-open signal is received after the predetermined time lapse from the time point of the input of the door-lock release signal.

According to the first aspect, it is determined whether or not the input timing of the door-open signal is after the predetermined time lapse from the time point of the input of the door-lock release signal, and based on the determination, the seatbelt is retracted only if the input of the door-open signal is after the predetermined timer lapse from the time point of the input of the door-lock release signal.

When a person is getting into a vehicle, a door is generally opened within a certain time after a first input of a door-lock release signal. In contrast, when an occupant is getting out of a vehicle, generally, a long time has passed since the first input of the door-lock release signal. Consequently, even if a door-open signal is input, the seatbelt is prevented from retraction until the predetermined time lapse after the first input of the door-lock release signal is determined. This prevents the seatbelt from being retracted when a person opens the door to get into the vehicle.

The value of the predetermined time lapse may be determined by calculating the average value of the time period between the input of the door-lock release signal and the opening of the door, and then adding a certain marginal value to the average value.

Furthermore, the term "only if" in the first aspect corresponds to a condition in which the door-open signal is input, and does not necessarily mean that the seatbelt retraction is not to be performed based on other conditions, such as when a buckle is released or when an engagement of a buckle is determined.

According to a second aspect of the present invention, a method for controlling a seatbelt retractor having a mechanism for retracting a seatbelt with a motor is provided. The method includes the steps of receiving a door-open signal; determining whether or not the following conditions are satisfied: (1) the door-open signal is received after a predetermined time lapse from a time point of an input of a door-lock release signal, and (2) a seated state of an occupant is determined by a seat sensor; and retracting the seatbelt only if the above conditions are met.
In addition to condition (1) corresponding to the first aspect, the second aspect is provided with condition (2). When both of these conditions are met, the seatbelt is retracted. This further prevents the seatbelt from being retracted when a person opens the door to get into the vehicle.

Furthermore, according to the method of one of the first and second aspects, the door-lock release signal is preferably sent from a key of a keyless entry system.

The first or second aspect is effective especially if the door-lock release signal is sent from the key of a keyless entry system.

### [Advantages]

As described above, the present invention provides a method for controlling a seatbelt retractor which allows retraction of a seatbelt only when an occupant is getting out of a vehicle. Such a method provides smooth seatbelt retraction for the occupant and prevents waste of power consumption of a battery.

### [Brief Description of the Drawings]

Fig. 1 is a flow chart illustrating a method for controlling a seatbelt retractor according to a first embodiment of the present invention.
Fig. 2 is a flow chart illustrating a method for controlling a seatbelt retractor according to a second embodiment of the present invention.

### [Best Mode for Carrying Out the Invention]

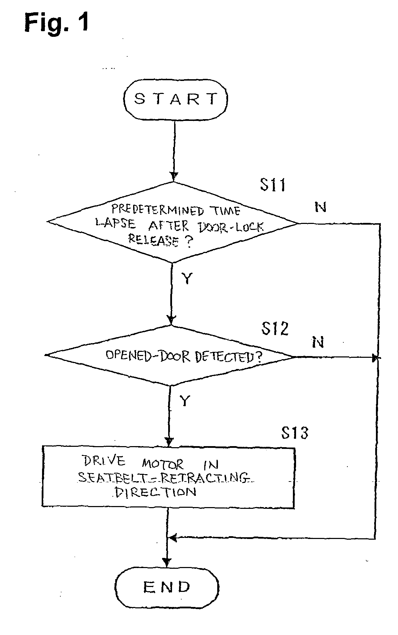

Embodiments of the present invention will now be described with reference to the drawings. Fig. 1 is a flow chart illustrating a method for controlling a seatbelt retractor according to a first embodiment of the present invention. Other than a seatbelt retraction mode (condition) shown in the drawings, there is generally more than one mode, such as when an engagement of a buckle is determined, but the description below will only include the mode related to the present invention.

The procedure shown in Fig. 1 is repeated at a predetermined interval except for the time period in which the seatbelt is being retracted.

In step S11, it is determined whether or not a predetermined time has passed since a door-lock release signal from a keyless entry system was input. If the predetermined time lapse is not determined, the operation ends. This implies that even if a door is opened before reaching the predetermined time lapse after the input of the door-lock release signal, it is determined that the door is being opened for a person to get into the vehicle.

In contrast, if the predetermined time lapse is determined, the operation proceeds to step S12 where it is detected whether or not the door is opened. Such detection can be performed by, for example, checking the state of a door switch. If it is determined that the door is not opened, the operation ends.

In contrast, if the opened state of the door is detected, it is determined that a vehicle occupant is getting out of the vehicle. In this case, the operation proceeds to step S13 where a motor is driven in a direction for retracting the seatbelt. Accordingly, the operation is prevented from proceeding from step S11 to step S13 when a person is getting into the vehicle, meaning that the seatbelt is retracted only when a vehicle occupant is getting out of the vehicle.

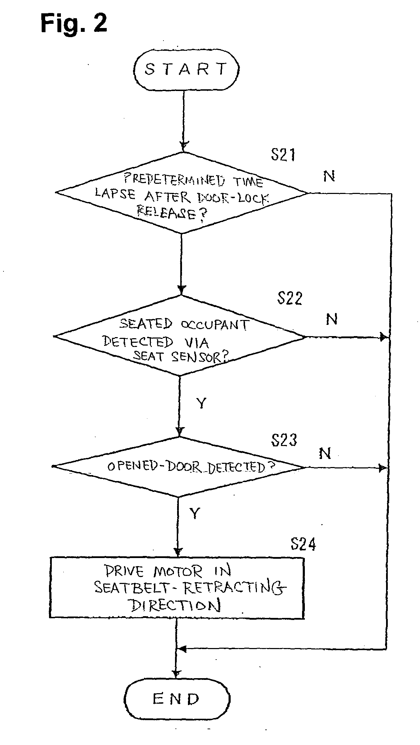

Fig. 2 is a flow chart illustrating a method for controlling a seatbelt retractor according to a second embodiment of the present invention. The concept of the second embodiment is basically the same as that of the first embodiment, but is different from the first embodiment in having additional determination steps S22 and S23. Similar to the first embodiment, the procedure is repeated at a predetermined interval except for the time period in which the seatbelt is being retracted.

In step S21, it is determined whether or not a predetermined time has passed since a door-lock release signal from a keyless entry system was input. If the predetermined time lapse is not determined, the operation ends.

In contrast, if the predetermined time lapse is determined, the operation proceeds to step S22 where it is detected via a seat sensor whether or not a vehicle occupant is seated. Such detection can be performed by, for example, checking whether the detected weight on a seat load-cell is equal to or more than a threshold value. If it is determined that a vehicle occupant is not seated, the operation ends. In contrast, if it is determined that a vehicle occupant is seated, the operation proceeds to step S23.

In step S23, it is detected whether or not a door is opened. Such detection can be performed by, for example, checking the state of a door switch. If it is determined that the door is not opened, the operation ends. In contrast, if the opened state of the door is detected, it is determined that a vehicle occupant is getting out of the vehicle. In this case, the operation proceeds to step S24 where a motor is driven in a direction for retracting the seatbelt.

According to the above procedure, the operation can properly enter the seatbelt retraction mode only when the vehicle occupant opens the door to get out of the vehicle.

## Claims

1. A method for controlling a seatbelt retractor having a mechanism for retracting a seatbelt with a motor, the method comprising the steps of receiving a door-open signal; determining whether or not the door-open signal is received (S12) after a predetermined time lapse from a time point of an input of a door-lock release signal (S11); and retracting the seatbelt (S13) only if the door-open signal is received after the predetermined time lapse from the time point of the input of the door-lock release signal.

2. A method for controlling a seatbelt retractor having a mechanism for retracting a seatbelt with a motor, the method comprising the steps of receiving a door-open signal; determining whether or not the following conditions are satisfied:
(1) the door-open signal is received (S23) after a predetermined time lapse from a time point of an input of a door-lock release signal (S21), and
(2) a seated state of an occupant is determined by a seat sensor (S22); and
retracting the seatbelt (S24) only if the above conditions are met.

3. The method for controlling a seatbelt retractor according to one of Claims 1 and 2, wherein the door-lock release signal is sent from a key of a keyless entry system.

4. A device for controlling a seatbelt retractor having a mechanism for retracting a seatbelt with a motor, the device configured to receive a door-open signal and a door-lock release signal; to determine whether or not the door-open signal is received after a predetermined time lapse from a time point of an input of the door-lock release signal; and to trigger the seatbelt retractor only for retracting the seatbelt if the device has received the door-open signal after the predetermined time lapse from the time point of the input of the door-lock release signal.

5. The device for controlling a seatbelt retractor having a mechanism for retracting a seatbelt with a motor and a seat sensor, the device configured to receive a door-open signal; a door-lock release signal and a seated state of an occupant; to determine whether or not the following conditions are satisfied:
(1) the device has received the door-open signal after a predetermined time lapse from a time point of an input of the door-lock release signal, and
(2) the device has determined the seated state of the occupant by the seat sensor; and
to trigger the seatbelt retractor only for retracting the seatbelt if the device has determined that the above conditions are met.

6. The device for controlling a seatbelt retractor according to Claim 4 or 5, wherein the device is configured to implement the method according to any one of Claims 1-3.
